# EUROPEAN PATENT SPECIFICATION

(11) **EP 2 144 346 B1**
(45) Date of publication and mention of the grant of the patent: **16.09.2015**
(21) Application number: 08172212.6
(22) Date of filing: 18.12.2008
(51) Int. Cl.: H02J 3/14, H02J 13/00

(54) **Interactive electric power demand limiting scheme**
Interaktiver Plan zur Begrenzung des Strombedarfs
Schéma interactif pour la demande énergétique

(30) Priority: 11.07.2008 EP 08160243
(43) Date of publication of application: 13.01.2010
(73) Proprietor: Laborelec CVBA, B-1630 Linkebeek (BE)
(72) Inventor: Kerremans, Sven, B-1630, LINKEBEEK (BE)
(74) Representative: Pronovem

(56) References cited:
- EP-A- 0 660 486
- US-A1- 2004 075 343
- US-A1- 2005 116 814
- US-A1- 2008 197 698
- US-B1- 6 465 908

## Description

### Field of the Invention

The present invention is related to electrical power load management within an entity fed by a power limited supply system where the potential demand largely exceeds the power limits.

### Background of the invention

In small power systems that are permanently or temporarily operated without a connection to a powerful electricity distribution system, a demand management system, be it quite current like frequency driven load shedding, is necessary for balancing demand and supply. In such power systems, the stability and security criteria requires avoiding exceeding the power supply limits, even for very short periods. On the other hand, advanced prioritization methods have to be used for fulfilling the demand in a flexible and user-friendly way.

Current demand management methods typically focus on time interval balancing, focussing on economic optimisation without consideration for instantaneous exceeding of the stability limits.

Patent application WO 2004/023624 discloses a power load management system, wherein load control switches provide feedback data to a load management CPU. The load management CPU monitors the load feedback data and other operational parameters for selectively switching load control switches to the open circuit state in order to ensure that the total load demanded does not exceed the demand limits imposed by the power source. The load management CPU allows automatic prioritization of the loads.

Whereas such a system guarantees that the power limits are never exceeded, it fails to use the available power efficiently and flexibly. In order to be able to supply all high priority loads with power, an unnecessary margin has to be foreseen on the power demand, leading to an increased cost, or reduced operation.

Document WO 2005/028258 discloses a method for energy management in which the available and the required energy in a subsequent time period are determined. The required energy is determined by consumers sending activation requests. A check is carried out to determine whether the required energy on the basis of all activation requests lies above the available energy. In such a case, a selection of consumers that will be activated in a subsequent time interval is made.

Document US 6465908 discloses a method for managing power in a system comprising a plurality of switches, a plurality of signal inputs and at least one controller coupled with the plurality of switches and controlling the plurality of switches to be opened or closed.

### Summary of the Invention

It is an aim of the invention to provide a power load management method and device which overcomes drawbacks of methods and devices of the prior art. In particular, it is an aim of the invention, to provide a power load management method and device, which enables to use the available electrical power more efficiently and/or with greater flexibility.

The invention relates to power load management systems, which refer to methods and/or devices for balancing the demand of electrical power to the availability thereof. Power load management methods and devices according to the invention can preserve the need for safe operation while responding to user's and client's process requirements. In order to avoid unexpected overrides of the limits, methods and devices of the invention handle power demand requests and analyze them before releasing the demand.

According to a first aspect of the invention, there is provided a method of balancing the demand of electrical power to the availability thereof according to claim 1, in a system comprising a plurality of electrical power consuming circuits, the system supplied at least temporarily with limited electrical power by a supply. The method comprises the steps of: connecting each of said circuits to the supply through a power switch, providing a controller for controlling operation of the power switches, closing the power switch of a circuit and opening the closed power switch. The step of closing the power switch comprises the steps of: firstly, sending a request to the controller for closing the power switch, secondly analysing the request by the controller in order to verify that the total demand of electrical power of the system will not exceed a predetermined limit upon closing the power switch and thirdly closing the power switch if verification resulted in that said total demand of electrical power will not exceed the predetermined limit upon closing said power switch.

Preferably, the predetermined limit is calculated based on the available electrical power in the system, or by the supply. Alternatively, the predetermined limit is calculated based on the electrical power reserve in the system, or by the supply. More preferably, for instance when storage batteries are used or when a generator set with limited fuel reserve is used, the predetermined limit is calculated also based on the energy reserve available in the system (in the supply).

Preferably, the method comprises the step of forcing the closed power switch to open after a predetermined time period.

Preferably, the method comprises the step of forcing the closed power switch to open if the power drawn by the circuit remained below a predetermined threshold over a predetermined second time period.

According to the invention, the power switch is state controlled as set out in the characterising part of claim 1.

The power switch of a first circuit can be opened following a second circuit of higher priority than the first circuit sending a request for closing and if the predetermined limit would be exceeded upon closing the second circuit.

Preferably, the method comprises the step of sending a signal by the controller in order to acknowledge a reception of the request for closing. More preferably, the method comprises the step of cancelling the request for closing, the cancelling step comprising sending a second request for closing to the controller following the step of sending a signal. The step of sending a second request cancels the request for closing. Pumping can be avoided by disabling the controller input for receiving the requests during a predetermined time period (dead time).

Preferably, the (total) demand of electrical power of the system is the (total) instantaneous demand. Alternatively, the (total) demand of electrical power of the system is the interval averaged demand.

Preferably, the demand of electrical power of the system is measured and evaluated in current amplitudes.

In a preferred embodiment, the invention implements a method or device with different operation modes that ensure flexibility and interactivity with the user's and client's processes. In particular, it implements a simple interface for entering power demand and/or priority requests.

The invention is applicable to any system where demands are managed by a central controller with preferably real time communication for measurement and control of the electric circuits.

According to an aspect, the present invention relates to an electricity demand management method that is implemented in a centralized controller and that schedules the activation, curtailment or shedding of several electrical circuits in order to limit the total instantaneous or time averaged power demanded by a group of circuits.

Any of the above methods of the invention can use real time measurements of the total demand, possibly by summation of individual demand signals. In addition, or alternatively, they can use real time measurements of the current in the individual circuits under control; possibly for part of them if the measurement of the total demand is independently available.

In addition, or alternatively, any of the above methods of the invention can use data characterizing each demand circuit, specifically concerning the rated or expected demand of the circuit (the load).

In addition, or alternatively, any of the above methods of the invention can use data characterizing the power supply conditions and constraints. In addition, or alternatively, they can use real time information about the power supply capability.

Methods according to the invention can use direct control of a contactor switch on each circuit under control.

Methods according to the invention can use a priority ranking system between the different circuits.

For some or all of the circuits/power switches, when a circuit/power switch is in the open state, it closes only after a request has been issued by the user or by a client process, and analyzed by the controller which is verifying that, after closing, the total instantaneous (power) or interval averaged demand will not exceed the prescribed limits.

Preferably, the limit is fixed by the reserve power available on the system.

Preferably, the demand is measured and evaluated in current amplitudes (Amps).

Preferably, the same controller contributes to the protection selectivity when the system operates in low short-circuit power conditions.

Preferably, any of the above methods according to the invention uses multiple exclusive modes of operation having each their own priority ranking systems and algorithms, the switching between said modes being triggered by:
- local user requests for change of mode and, or, local user power demand requests, and/or
- programmed time schedules or constraints, and/or
- alarm and emergency signals, and/or
- signals from appliances or client processes.

Change of mode requests can also be entered and supervised by the local or remote consoles of the central controller.

Preferably, local user requests are given through 2-way communicating interfaces equipped with a push button for sending pulses to the controller and with a light emitting device controlled by the central controller.

Preferably, after reception of a request, the light emitting device is activated following specific flashing codes, informing the user about reception of his request and the priority received. When this is established, a further activation of the push button cancels the request.

According to another aspect of the invention, there is provided a device for balancing the demand of electrical power to the availability thereof according to claim 12.

Preferably, the device comprises an interface for two-way communication between the power switches and the controller. More preferably, the interface for two-way communication comprises a push button for sending pulses to the controller and a light emitting device controlled by the controller. Even more preferably, the light emitting device is configured to emit light according to predetermined flashing codes relating to the analysis by the controller of a request for closing and/or to a priority ranking.

### Short description of the drawings

Figure 1 shows the power system on which the invention is applied.

Figure 2a shows the frequency droop characteristic of the inverters.

Figure 2b represents the frequency driven curtailment of the renewable sources.

Figure 3 shows typical demand circuits 30 with their power switching units 32, 33, 34.

Figure 4A represents a scheme of a centralized controller. Figure 4B represents a four-state controller for the power switch units

Figure 5 shows LED flashing codes.

### Detailed Description of the Invention

The invention relates to power load management systems, which refer to methods and/or devices for balancing the demand of electrical power to the availability thereof. Such power load management systems are useful in grids where the electrical power available is at least temporarily limited.

The different loads connected to the grid, which can be electrical power consuming circuits of various kind, are connected through power switches. A power switch enables to disconnect the load connected to that switch from the electrical grid in order to limit the demand for electrical power within the system.

According to the invention, the operation of the power switches is supervised by a controller, which is preferably centralized. The central (or centralized) controller decides when and if a power switch is closed or opened.

Each power switch can be provided as a module additionally comprising a unit which is configured to manage the operation (actuation) of the power switch, the communication with the (central) controller, and which is possibly also configured to measure the electrical power consumed by the circuit (the load).

According to the invention, a power switch can only be closed after a request has been sent for closing the power switch. This can be the case for some, or for all the power switches. Such a request can be sent to the central controller by a user or a client process related to the circuit (the load).

The request is processed and analysed by the controller, which verifies that closure of the power switch will not cause the demand of electrical power to exceed the available power. The verification can be performed based on measuring the total demand within the system (e.g. at a single location in the system) and/or separately measuring the demand of some (or all) the circuits. The two measurements can be combined. In addition, the verification of the request by the controller can take into account an expected demand of the corresponding circuit. This can be a rated demand, or an extrapolation based on historical data concerning the circuit.

The verification of the request can comprise comparing the expected increase in the demand (i.e. the expected demand of the corresponding circuit) with the available reserve of electrical power and/or energy. In case the available reserve is slim, e.g. below a predetermined threshold, a correction factor can be applied (i.e. the actual reserve is multiplied by a number < 1), such that a smaller power reserve is used in the comparison.

Only after a positive verification that the expected total demand will not exceed a predetermined limit representative of the available power (or similarly that the expected increase in demand does not exceed a predetermined limit representative of the available reserve) will the request for closing the power switch be granted.

Measurements of electrical power demand, as well as of the available electrical power can be predetermined, either in advance, or preferably real-time.

By so doing, the central controller is aware of every process (circuit) that is about to take up power, and is able to check the impact of the potential electrical power consumption of the circuit before releasing its operation.

A circuit (or a load) which has been connected to the grid, and thus to the electrical power supply, by closing the power switch, is disconnected afterwards. A power switch can be opened after the circuit has terminated with drawing power, after a time slot that has been accorded to the circuit/the power switch has elapsed, after the time for the circuit to actually draw power after it was connected has elapsed without effect, or according to other policies. By so doing, the available power resources can be used efficiently and be distributed to circuits which actually require power at the given instant of time. Also, the controller can avoid to take into account potential power demand of "sleeping" circuits (i.e. circuits which at a given instant do not consume power).

A preferred embodiment concerns the implementation of one of the policies of opening a power switch. Once a circuit has been connected to the grid, the central controller will monitor the power it draws. If the power drawn by the circuit falls below a predetermined threshold (e.g. can not be detected) for a predetermined time period, the central controller will disconnect the circuit by opening the corresponding power switch. If the circuit wants to draw power again, a new request has to be sent to the central controller.

According to another preferred embodiment, once a circuit has been connected to the grid, it has a predetermined time delay for actually starting to draw power from the grid. If it does not (the central controller e.g. monitors a power below a predetermined threshold), the corresponding power switch is opened and can remain blocked for a predetermined time period.

According to another embodiment, after closing of the power switch associated with a circuit, the circuit/the power switch receives a time slot in which the power switch remains closed. Upon expiry of the time slot, the power switch is forced to open.

Two or more of the policies identified in the above embodiments can be implemented in combination in a single method according to the invention.

In addition, priority ranking rules can be implemented in the central controller, for assigning a priority level to each of the circuits (and hence each of the corresponding power switches).

Systems according to the invention can be implemented in an operational base or station. In such an operational base, the electricity demand can be much influenced by the momentary activities of the crews. It is possible, often without any compromise with the working and living comfort to restrict the supply to specific areas. Systems of the invention can do this by considering different operation modes that match the current activities in the base:
- Start-up
- Normal mode
- Office & laboratory mode
- Kitchen mode
- Medical aid mode
- Living room mode
- Derated power mode
- Genset mode
- Fire & evacuation mode
- Survival mode
- Winter mode
- Shutdown

The switching from one mode to another can be triggered by user requests (such as by push buttons or touch screens), client processes, timers & clocks, electrical parameters and alarms.

Operation modes can be implemented in combination with priority ranking. Each time the operation mode is modified, the priority levels of the (demand) circuits or loads are revised and updated.

Specific conditions can be defined for each transition. For example, a user cannot cause a transition into the kitchen mode when the Fire & evacuation mode is on.

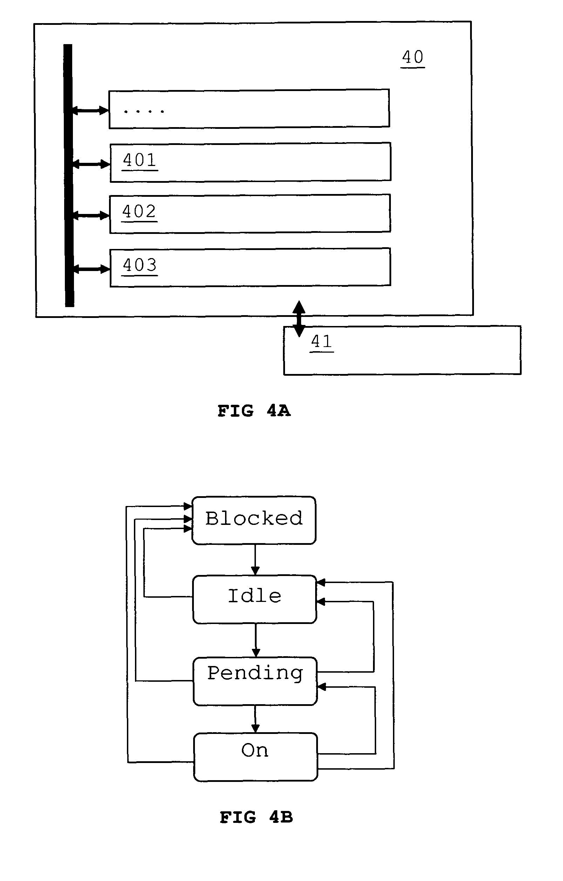

The control of the power switch of a controlled distribution circuit is preferably based on a four-state controller as illustrated in figure 4B.

The key issue is that a power switch always passes through a "Pending" state before going to the "On" state; any demand is analysed before being released. The power switch is engaged in the "On" state only.

In the "Idle" state, the power switch is open and no requests for closing the switch are pending. In the "Pending" state, the power switch is open and a request for closing the switch is pending. In the "On" state, the power switch is closed.

In a possibly additional "Blocked" state, the power switch is open and its operation is blocked. In this case, the requesting user or process can be immediately informed that his requests will be ignored (see further interface). The "Blocked" state provides the advantage of safer programming the controller.

In the following, possible state transition conditions are identified:
- from "Idle" to "Pending"
   o local user request (user interface - activation of the push-button)
   o internal request from the controller (time scheduler, change of operation mode, emergency management, requests from client processes, ..)
- from "Idle" to "Blocked"
   o for specific changes of operation mode (including emergency management, shutdown,..)
- from "Pending" to "On"
   o reserve power is higher than expected incremental demand, under control of the priority manager
- from "Pending" to "Idle"
   o local user request cancelling the demand (user interface - activation of the push-button)
   o *Pending-Idle time-out* as defined for the current priority allocated to the circuit
- from "Pending" to "Blocked"
   o for specific change of operation mode (including emergency management, shutdown, ...)
- from "ON" to "Idle"
   o local user request releasing the demand (user interface - activation of the push-button )
   o decision of the priority manager, but not before a secured time interval defined by the *lock-on time* parameter defined for the current priority allocated to the circuit
   o demand remained below the *detection threshold* during a period longer that the *self-release time*
- from "ON" to "Pending"
   o for specific change of operation mode (including emergency management, shutdown, ...)
- from "ON" to "Blocked"
   o *Lock-out time* as defined for the corresponding circuit within the current operating mode; sets a *Blocking time* controlling the time in the "Blocked" state
- from "Blocked" to "Idle"
   o *Blocking time* (if activated)
   o internal request from the controller (time scheduler, change of operation mode, emergency management, request through controller console)

The Pending - Idle time-out refers to the time after which the "Pending" state returns to "Idle".

The self-release time refers to the delay to return to "Idle" state if the demand remained below the detection threshold.
The detection threshold can be expressed in % of the rated demand.
The lock-on time refers to the time during which the "On" state is secured.
The lock-out time refers to the time after which transition from "On" to "Blocked" is forced.
The blocking time refers to the duration of stay in "Blocked" state (zero if the timer is not activated).

The above parameters can be defined in a configuration menu for each circuit's priority level and per operation mode as illustrated in table 1. They can be defined user by user or per process or group (HVAC, kitchen,...) .

**Table 1: Typical parameters for the control of the circuits connected to the grid via a (controllable) power switch.**

| **Priority level** | Pending-Idle Timeout (min) | Self release time (min) | Detection threshold (%) | Lock-on time (min) | Lock-out time (s) | Blocking time (min) |
|---|---|---|---|---|---|---|
| **1** | ∞ | ∞ | 0 | ∞ | ∞ | 0 |
| **2** | 30 | 30 | By user | 30 | 60 | 5 |
| **3** | 15 | 15 | By user | 15 | 45 | 15 |
| **4** | 5 | 5 | By user | 5 | 30 | 30 |
| **5** | 1/10 | 1 | By user | 0 | 15 | 60 |

The power switches are advantageously arranged to be remote controlled. An interface can be provided for communicating between the central controller and a power switch, preferably enabling bidirectional (or two-way) communication. This can allow the user or client process to be informed about the current state of the power switch.

The interface can comprise a user interface for requesting energizing of a circuit by engagement of a power switch, such as a local unit with a push-button for sending pulses to the controller and a LED (light emitting diode) actuated by the controller. Alternatively, the user interface can be an interface for a client process.

The pulses sent by the user (or the client) can trigger the ["Idle" to "Pending"], ["Pending" to "Idle] and ["ON" to "Idle"] transitions of the power switch (circuit) to which they are associated.

For avoiding pumping, a dead time interval is preferred before repeating a pulse, such as a dead time interval of 3 s.

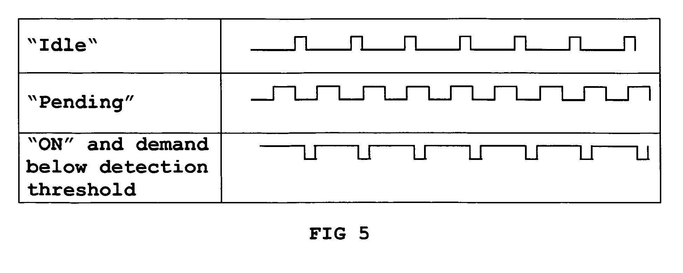

The LED of the user interface can be used for informing the user about the course of his request:
- the LED is OFF when the controller is in the "Blocked" state;
- the LED is ON:
   - when the push-button is depressed, except in the "Blocked" state; for the user, this is a confirmation that the controller is sensing his input, or
   - when the controller is in the "ON" state, while the demand is above the detection threshold level;
- the LED is flashing such as in cases as represented in figure 5.

The user can request or force change of modes trough various types of interfaces such as touch screens, emergency buttons and particularly also through the same simple interface as described here above. In the latter case, the control logic can be the same and, by so doing, the LED flashing codes can be used for informing the user about the course of his request.

In case of a priority ranking of the various circuits, the central controller advantageously comprises a priority manager. The priority manager is preferably permanently cycling, for making an arbitration between the requests and priorities and possibly for calculating the power reserve.

In some cases, the true limitation of the power source is on the current rather than on the power. In those cases, it can be advantageous to make the calculation of the power reserve in terms of current instead of active power. Moreover, the calculation (of power or current) is preferably done phase by phase since the demand is not necessarily equally balanced between the three phases.

Once the power reserve (in Amps) has been calculated, possibly for each phase, the central controller can make an arbitration between the power (or current) reserve (availability) and the requests by the various circuits (loads).

In case the power (current) reserve is below a predetermined threshold, and/or in case the total available energy reserve (state of charge of batteries, fuel reserve, ...) is below a predetermined threshold, a correction factor can be applied to the power (current) reserve. A correction factor refers to a multiplication of the actual power (current) reserve by a number < 1. For example, a correction factor (e.g. of 0.5) can be applied to the power (current) reserve, or to the total available power (current) in case the actual available energy reserve (e.g. state of charge of the batteries) is smaller than between 35% and 15% of a nominal value, e.g. smaller than 25%.
In case the actual energy reserve (e.g. state of charge of the batteries) is smaller than between 20% and 5% of a nominal value, e.g. smaller than 15%, absolute priority is preferably given to the reconstitution of the energy reserve (e.g. state of charge of the batteries), possibly considering a total lack of power reserve (setting power reserve to zero).

In case of a priority manager, the priority manager can make an arbitration between power demand and current circuit priorities, possibly disconnecting circuits of lower priority for accepting power demands of higher priorities.

The priority manager can trigger transitions from 'ON' to 'Pending' or 'Idle' in such a way that the prospective increase of demand remains under the limits of the reserve power of each phase, with due consideration for the parameters and state registers of the circuit controller units.

For circuits (or loads) that are 'on' and hence consuming power, the central controller can make use of the actual current (or taken up power) for deciding on which power switch possibly to open. The central controller can make use of the rated demand of the circuit for deciding which request for closing to grant. The priority manager can make an arbitration between circuits on same data. The rated demand is preferably taken into account in cases wherein no measurement is available.

The periodicity of the working cycle of the central controller (and possibly of the priority manager) is preferably such that the power switches have the time to establish or to clear the circuits (maximum reaction time of contactors etc.) between two cycles.

The invention will be understood better from the following description of an embodiment thereof provided by way of example and therefore in no way limiting, and given with reference to the appended drawings.

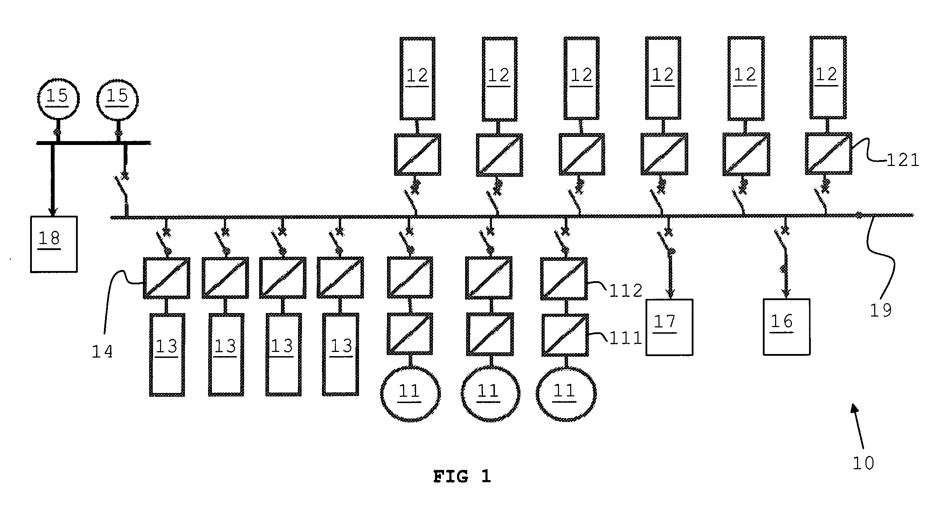

The power system 10 as illustrated in figure 1 is designed for an operational base without any external power supply or public grid; it is designed to use renewable energy sources for electricity generation.

For security reasons, the system is equipped with a kerosene fuelled emergency generator set. The power supply consists of:
- 9 x 6 kW peak wind turbines 11, coupled to the grid 19 by AC/DC inverters 111 and DC/AC inverters 112;
- 63 kW peak Photovoltaic (PV) modules 12, coupled to the grid 19 by DC/AC inverters 121;
- 4 x 2000 Ah x 48V batteries 13;
- 4 sets of 3 x 5 kW single phase synchronized AC/DC inverters 14 for driving the batteries 13 and stabilizing the system 10 and
- 2 x 40 kVA emergency genset 15.

The total potential demand, consisting of loads 16, 6 kW dump loads 17 and loads 18 related to garage and welding tools, amounts to 400 kVA, significantly more than the installed generation capacity.

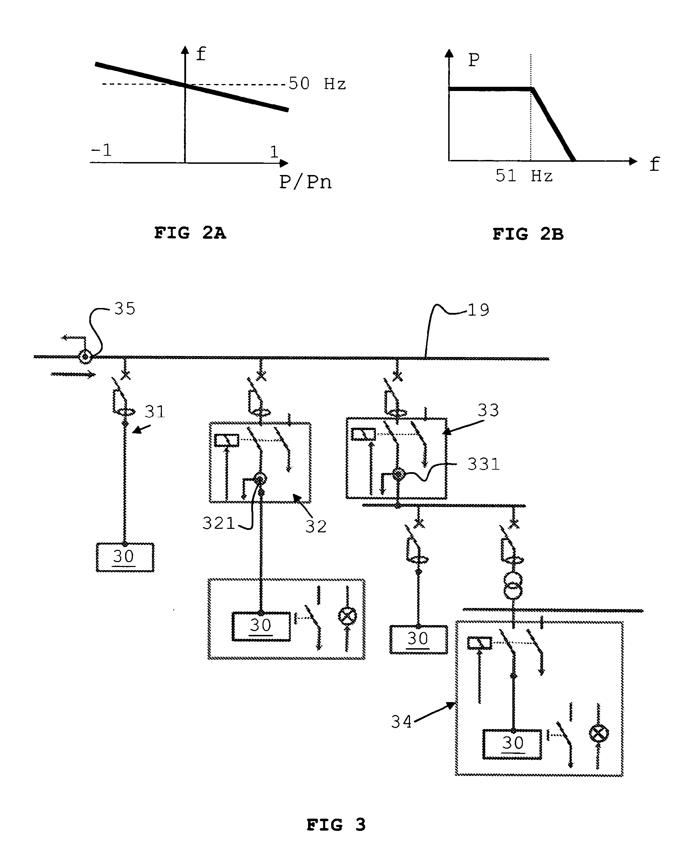

Voltage regulation and power balancing are achieved by AC/DC battery inverters 14 from SunnyIsland™. They are synchronized and take care of a primary regulation by implementing droops for active power/frequency and reactive power/voltage control (see figure 2a).

The renewable sources work at maximum available power but, if the system frequency (controlled by the inverters) exceeds 51 Hz, their production is curtailed (figure 2b). The blade angle of the wind turbines is not adjustable and the excess energy produced by the wind generator is dissipated in resistors (this energy can be recuperated for water de-icing and heating), whereas the maximum power point operating mode (MPP) of the PV modules is modified accordingly. In the MPP mode, the inverter is permanently tracking on the U-I characteristic of the PV cells the point maximising the power output; it varies in function of the momentary actual solar radiation, cell temperature, age, surface pollution. In the present installation, when the system frequency exceeds a predetermined limit, such as 51 Hz (for a 50 Hz grid, see figure 2b), the operating mode of the PV modules is changed from MPP to a regulation mode where the power output is limited according to the system power frequency deviation. The purpose is to keep the frequency within limits even when the source power exceeds the demand (of course when yet there is no more possibility of energy storage in the batteries). The power curtailment is frequency driven, in such a way that it is adequately shared between the sources.

So doing, the inverter characteristic is such that when the renewable sources are curtailed, any possibility to increase the rate of charge of the batteries has been used already.

If only 20% of battery energy is left, the genset is started by the battery inverter. In this case, the battery inverters switch to constant charge operation while the power balancing is taken over by the genset.

This system is stable in voltage and frequency as far as it works within the regulating limits of the inverters. In such applications, covering the demand in all possible situations would lead to over dimensioned inverters. This is avoided by systems (methods and/or devices) according to the present invention. The demand power management system is focusing on instantaneous power limitation in order to keep the system in safe working conditions.

The distribution circuits can be of the following type (see figure 3):
- Always on circuits 31 (i.e. constantly closed power switch, or no power switch at all)
- Individually controlled circuit with a power switch module 32.
- Multi load circuits with main control (main power switch modules 33) and sub control units (sub power switch modules 34).

A power switch module comprises the power switch and associated control unit. The control unit can be arranged for actuating the power switch upon reception of a signal. The control unit can further comprise a communication unit and/or a measurement unit.

The total demand as well as the demand seen by the main power switch modules (main control units 32 and 33) is measured and transmitted to the central controller. The total demand of electrical power can be measured at a measurement unit 35 on the (main) grid 19. The demand of different circuits can be measured locally by measurement units 321 and 331 for example. Each circuit is represented in figure 3 with an electrical power consuming load 30.

Each measurement unit measures the amplitude of the current of the three individual phases. The currents fed-in by the inverters (positive or negative) and genset are also measured.

The centralized controller 40 stands for all the processes (see figure 4A). The demand power management module 401 which is part of it, communicates with remote controlled units 41, such as switching units (the power switches / control units), user interfaces for power or priority requests, measurement units for the power demand, alarms and emergency signals and other units. The centralized controller 40 can comprise additional modules for managing other units, such as
- Water treatment module 402
- HVAC management module 403
- Fire security module
- ....

Two-way communication between the demand management module and other modules can include power demand requests, priority requests, demand measurements, alarms, switching controller status,...

The control of the power switch of a controlled distribution circuit is based on a four-state controller as identified above.

The user interface for requesting energizing of a circuit is a local unit with a push-button for sending pulses to the controller and a LED (light emitting diode) actuated by the controller.

The pulses sent by the user trigger the ["Idle" to "Pending"], ["Pending" to "Idle] and ["ON" to "Idle"] transitions of the circuit to which they are associated.

For avoiding pumping, a dead time interval of 3s is necessary before repeating a pulse.

The priority manager is permanently cycling, for calculating the power reserve and for making an arbitration between the requests and priorities.

The true limitation of the power inverters being on the current rather than on the power, the calculation of the power reserve is made in terms of current instead of active power. Moreover, the calculation is done phase by phase since the demand is not necessarily equally balanced between the three phases.

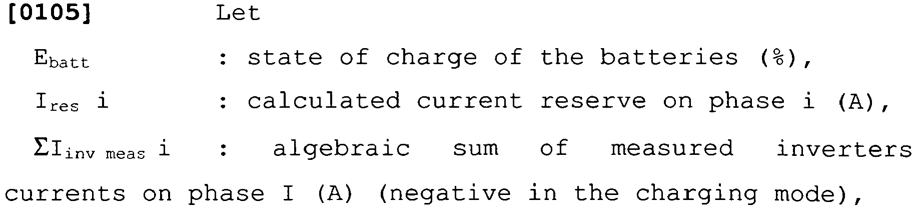

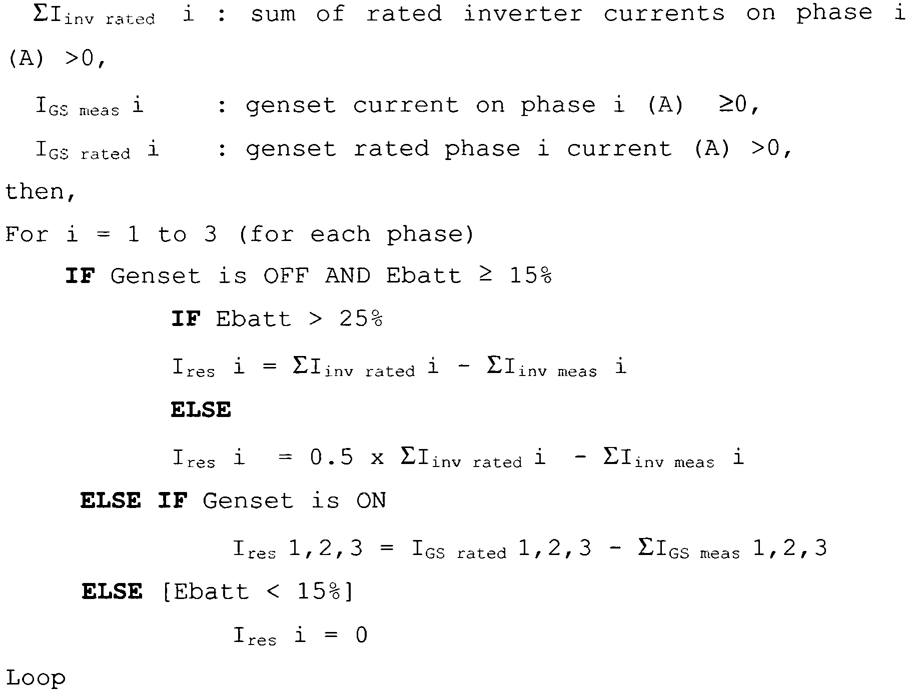

Once the power reserve (in Amps) has been calculated for each phase, the priority manager makes an arbitration between power demand and current circuit priorities, possibly disconnecting circuits of lower priority for accepting power demands of higher priorities.

The priority manager triggers transitions from 'ON' to 'Pending' or 'Idle' in such a way that the prospective increase of demand remains under the limits of the reserve power of each phase, with due consideration for the parameters and state registers of the circuit controller units.

When the system is operated in "power derated mode" the demand management module can also switch off the circuits for which a phase current would exceed a predefined level.

## Claims

1. A method of balancing the demand of electrical power to the availability thereof in a system (10), the system comprising a plurality of electrical power consuming circuits (16,17,18,30) and supplied at least temporarily with limited electrical power by a supply (11,12,13,15), wherein the method comprises the steps of:
- connecting each of said circuits to the supply through a power switch (32,33,34),
- providing a controller for controlling operation of the power switches,
- closing the power switch of a circuit and
- opening the closed power switch,
wherein the step of closing the power switch comprises the steps of:
- sending a request to the controller for closing the power switch,
- analysing the request by the controller in order to verify that the total demand of electrical power of the system will not exceed a predetermined limit upon closing the power switch,
- closing the power switch if verification resulted in that said total demand of electrical power will not exceed the predetermined limit upon closing said power switch,
**characterised in that** the controller controls the power switches based on:
- an IDLE state wherein the power switch is open and idle,
- an ON state wherein the power switch is closed,
- a PENDING state wherein the power switch is open and a request for closing the switch is pending, such that each transition from the IDLE state to the ON state passes through the PENDING state, and
- a BLOCKED state wherein the power switch is open and the operation of the power switch is blocked,
such that a power switch in the ON state is forced to the BLOCKED state after a LOCK-OUT time and is thereafter released to the IDLE state only after a BLOCKING time, said LOCK-OUT and BLOCKING times being determined based on a priority ranking scheme implemented for the plurality of circuits.

2. The method according to claim 1, wherein the power switch, upon turning to the ON state, is secured in the ON state during a LOCK-ON time determined based on the priority ranking.

3. The method according to claim 1 or 2, comprising the step of forcing the power switch from the ON state to the IDLE state if the power drawn by the circuit remained below a predetermined threshold over a predetermined Self-release time period.

4. Method of claim 3, wherein the Self-release time period is determined based on the priority ranking.

5. Method of any one preceding claim, comprising the step of forcing the power switch from the PENDING state to the IDLE state after a Pending-Idle timeout period determined based on the priority ranking.

6. The method according to any one of the preceding claims, the supply at least temporarily comprising limited energy, wherein both a reserve of electrical power available from the supply and a reserve of energy available in the supply are taken into account for calculating the predetermined limit.

7. Method of claim 6, wherein when the reserve of energy is smaller than a predetermined amount, the reserve of electrical power is corrected by a correction factor smaller than 1 to obtain a corrected power reserve and wherein the corrected power reserve is taken into account for calculating the predetermined limit.

8. The method according to any one of the preceding claims, comprising the step of sending a signal by the controller in order to acknowledge a reception of the request for closing.

9. The method according to claim 8, comprising the step of cancelling the request for closing, the cancelling step comprising sending a second request for closing to the controller following the step of sending a signal, the step of sending a second request cancelling the request for closing.

10. The method according to any one of the preceding claims, wherein the total demand of electrical power of the system is the total instantaneous demand or the total interval averaged demand.

11. The method according to any one of the preceding claims, wherein the demand of electrical power of the system is measured and evaluated in current amplitudes.

12. A device for balancing the demand of electrical power to the availability thereof, connectable in a system, the system comprising a plurality of electrical circuits arranged to consume electrical power, the system in use being supplied at least temporarily with limited electrical power by a supply, wherein the device comprises:
- a plurality of power switches (32,33,34) for connecting the electrical circuits to the supply and
- a controller for controlling the operation of the power switches, wherein the controller is a state controller for at least one power switch, the state controller implementing four states,
wherein the device comprises means for carrying out the method according to any one of the preceding claims.

13. The device according to claim 12, comprising an interface for two-way communication between the power switches and the controller.

14. The device according to claim 13, wherein the interface for two-way communication comprises a push button for sending pulses to the controller and a light emitting device controlled by the controller.

15. The device according to claim 14, wherein the light emitting device is configured to emit light according to predetermined flashing codes relating to the analysis by the controller of a request for closing and/or to a priority ranking.

## Patentansprüche

1. Verfahren zum Ausbalancieren des Bedarfs an elektrischer Leistung in Bezug zu ihrer Verfügbarkeit in einem System (10), wobei das System mehrere elektrische Leistung verbrauchende Schaltungen (16, 17, 18, 30) umfasst und von einer Versorgung (11, 12, 13, 15) zumindest zeitweilig mit begrenzter elektrischer Leistung versorgt wird, wobei das Verfahren die folgenden Schritte umfasst:
- Anschließen jeder der Schaltungen an die Versorgung durch einen Netzschalter (32, 33, 34),
- Bereitstellen eines Controllers zum Steuern der Betätigung der Netzschalter,
- Schließen des Netzschalters einer Schaltung und
- Öffnen des geschlossenen Netzschalters,
wobei der Schritt des Schließens des Netzschalters folgende Schritte umfasst:
- Senden einer Anforderung an den Controller zum Schließen des Netzschalters,
- Analysieren der Anforderung durch den Controller, um zu verifizieren, dass der Gesamtbedarf des Systems an elektrischer Leistung nach dem Schließen des Netzschalters eine festgelegte Begrenzung nicht überschreiten wird,
- Schließen des Netzschalters, wenn die Verifikation ergeben hat, dass der Gesamtbedarf des Systems an elektrischer Leistung nach dem Schließen des Netzschalters die festgelegte Begrenzung nicht überschreiten wird,
**dadurch gekennzeichnet, dass** der Controller die Netzschalter basierend auf Folgendem steuert:
- einem IDLE-Zustand, in dem der Netzschalter offen und in Aus-Stellung ist,
- einem ON-Zustand, in dem der Netzschalter geschlossen ist,
- einem PENDING-Zustand, in dem der Netzschalter offen ist und eine Anforderung zum Schließen des Schalters hängig ist, sodass jeder Übergang vom IDLE-Zustand in den ON-Zustand den PENDING-Zustand durchläuft, und
- einen BLOCKED-Zustand, in dem der Netzschalter offen ist und die Betätigung des Netzschalters gesperrt ist,
sodass ein Netzschalter im ON-Zustand nach einer LOCK-OUT-(Ausschaltungs-)Zeit in den BLOCKED-Zustand gezwungen wird und danach erst nach einer BLOCKING-(Sperr-)Zeit in den IDLE-Zustand freigegeben wird, wobei die LOCK-OUT- und die BLOCKING-Zeit auf Basis eines Prioritätenranglistensystems, das für die mehreren Schaltungen implementiert wird, festgelegt werden.

2. Verfahren nach Anspruch 1, wobei der Netzschalter nach dem Umschalten in den ON-Zustand während einer LOCK-ON-(Anschaltzeit-)Zeit, die basierend auf der Prioritätenrangliste festgelegt wird, im ON-Zustand gesichert wird.

3. Verfahren nach Anspruch 1 oder 2, umfassend den Schritt des Zwingens des Netzschalters aus dem ON-Zustand in den IDLE-Zustand, wenn die von der Schaltung gezogene Leistung über einen festgelegten Selbstfreigabe-Zeitraum unter einem festgelegten Grenzwert bleibt.

4. Verfahren nach Anspruch 3, wobei der Selbstfreigabe-Zeitraum basierend auf der Prioritätenrangliste bestimmt wird.

5. Verfahren nach einem der vorhergehenden Ansprüche, umfassend den Schritt des Zwingens des Netzschalters aus dem PENDING-Zustand in den IDLE-Zustand nach einem Aus-Hängig-Zeitüberschreitungs-Zeitraum, der basierend auf der Prioritätenrangliste bestimmt wird.

6. Verfahren nach einem der vorhergehenden Ansprüche, wobei die Versorgung zumindest zeitweilig begrenzte Energie umfasst, wobei sowohl eine Reserve der von der Versorgung verfügbaren elektrischen Leistung und eine Reserve der in der Versorgung verfügbaren Energie beim Berechnen der festgelegten Begrenzung berücksichtigt werden.

7. Verfahren nach Anspruch 6, wobei, wenn die Energiereserve kleiner als eine festgelegte Menge ist, die Reserve der elektrischen Leistung um einen Korrekturfaktor kleiner als 1 korrigiert wird, um eine korrigierte Leistungsreserve zu erhalten, und wobei die korrigierte Leistungsreserve beim Berechnen der festgelegten Begrenzung berücksichtigt wird.

8. Verfahren nach einem der vorhergehenden Ansprüche, umfassend den Schritt des Sendens eines Signals durch den Controller, um einen Empfang der Anforderung zum Schließen zu bestätigen.

9. Verfahren nach Anspruch 8, umfassend den Schritt des Löschens der Anforderung zum Schließen, wobei der Löschungsschritt das Senden einer zweiten Anforderung zum Schließen an den Controller nach dem Schritt des Sendens eines Signals umfasst, wobei der Schritt des Sendens einer zweiten Anforderung die Anforderung zum Schließen löscht.

10. Verfahren nach einem der vorhergehenden Ansprüche, wobei der Gesamtbedarf des Systems an elektrischer Leistung der momentane Gesamtbedarf oder der über ein Intervall gemittelte Gesamtbedarf ist.

11. Verfahren nach einem der vorhergehenden Ansprüche, wobei der Bedarf des Systems an elektrischer Leistung in Stromamplituden gemessen und bewertet wird.

12. Vorrichtung zum Ausbalancieren des Bedarfs an elektrischer Leistung in Bezug zu ihrer Verfügbarkeit, die in einem System anschließbar ist, wobei das System mehrere elektrische Schaltungen umfasst, die zum Verbrauchen elektrischer Leistung angeordnet sind, wobei das System im Gebrauch zumindest zeitweilig mit begrenzter elektrischer Leistung von einer Versorgung versorgt wird, wobei die Vorrichtung Folgendes umfasst:
- mehrere Netzschalter (32, 33, 34) zum Anschließen der elektrischen Schaltungen an die Versorgung und
- einen Controller zum Steuern der Betätigung der Netzschalter, wobei der Controller ein Zustandscontroller für mindestens einen Netzschalter ist, wobei der Zustandscontroller vier Zustände implementiert,
wobei die Vorrichtung Mittel zum Ausführen des Verfahrens nach einem der vorhergehenden Ansprüche umfasst.

13. Vorrichtung nach Anspruch 12, umfassend eine Schnittstelle für die Zwei-Wege-Kommunikation zwischen den Netzschaltern und dem Controller.

14. Vorrichtung nach Anspruch 13, wobei die Schnittstelle für die Zwei-Wege-Kommunikation eine Drucktaste zum Senden von Pulsen zum Controller und ein vom Controller gesteuertes lichtemittierendes Bauelement umfasst.

15. Vorrichtung nach Anspruch 14, wobei das lichtemittierende Bauelement dafür konfiguriert ist, Licht gemäß festgelegten Blinkcodes in Bezug auf die Analyse einer Anforderung zum Schließen durch den Controller und/oder auf eine Prioritätenrangliste zu emittieren.

## Revendications

1. Procédé d'équilibrage de la demande de puissance électrique à la disponibilité de celle-ci dans un système (10), le système comprenant une pluralité de circuits consommant de la puissance électrique (16, 17, 18, 30) et alimentés au moins temporairement avec une puissance électrique limitée par une alimentation (11, 12, 13, 15), dans lequel le procédé comprend les étapes consistant à :
- connecter chacun desdits circuits à l'alimentation par l'intermédiaire d'un commutateur de puissance (32, 33, 34),
- prévoir un contrôleur pour commander le fonctionnement des commutateurs de puissance,
- fermer le commutateur de puissance d'un circuit, et
- ouvrir le commutateur de puissance fermé,
dans lequel l'étape de fermeture du commutateur de puissance comprend les étapes :
- d'envoi d'une demande au contrôleur pour fermer le commutateur de puissance,
- d'analyse de la demande par le contrôleur afin de vérifier que la demande totale de puissance électrique du système ne dépassera pas une limite prédéterminée lors de la fermeture du commutateur de puissance,
- de fermeture du commutateur de puissance si la vérification résultait en ce que ladite demande totale de puissance électrique ne dépassera pas la limite prédéterminée lors de la fermeture dudit commutateur de puissance,
**caractérisé en ce que** le contrôleur commande les commutateurs de puissance sur la base :
- d'un état « inactif » dans lequel le commutateur de puissance est ouvert et inactif,
- d'un état « actif » dans lequel le commutateur de puissance est fermé,
- d'un état « en attente » dans lequel le commutateur de puissance est ouvert et une demande pour fermer le commutateur est en attente, de sorte que chaque transition de l'état « inactif » à l'état « actif » passe par l'état « en attente », et
- d'un état « bloqué » dans lequel le commutateur de puissance est ouvert et le fonctionnement du commutateur de puissance est bloqué
de sorte qu'un commutateur de puissance dans l'état « actif » est forcé à l'état « bloqué » après un temps de « verrouillage » et est ensuite relâché dans l'état « inactif » uniquement après un temps de « blocage », lesdits temps de « verrouillage » et de « blocage » étant déterminés sur la base d'une méthode de classement par priorité mise en oeuvre pour la pluralité de circuits.

2. Procédé selon la revendication 1, dans lequel le commutateur de puissance, lorsqu'il passe dans l'état « actif », est bloqué dans l'état « actif » pendant un temps de « blocage dans l'état actif » déterminé sur la base du classement par priorité.

3. Procédé selon la revendication 1 ou 2, comprenant l'étape de forçage du commutateur de puissance de l'état « actif » à l'état « inactif » si l'énergie consommée par le circuit est restée au-dessous d'un seuil prédéterminé pendant une période de temps d'auto-libération prédéterminée.

4. Procédé selon la revendication 3, dans lequel la période de temps d'auto-libération est déterminée sur la base du classement par priorité.

5. Procédé selon l'une quelconque des revendications précédentes, comprenant l'étape de forçage du commutateur de puissance de l'état « en attente » à l'état « inactif » après une période de temps de dépassement « inactif en attente » déterminée sur la base du classement par priorité.

6. Procédé selon l'une quelconque des revendications précédentes, l'alimentation comprenant au moins temporairement une énergie limitée, dans lequel à la fois une réserve de puissance électrique disponible à partir de l'alimentation et une réserve d'énergie disponible dans l'alimentation sont prises en compte pour calculer la limite prédéterminée.

7. Procédé selon la revendication 6, dans lequel, lorsque la réserve d'énergie est inférieure à une quantité prédéterminée, la réserve de puissance électrique est corrigée par un facteur de correction inférieur à 1 pour obtenir une réserve de puissance corrigée, et dans lequel la réserve de puissance corrigée est prise en compte pour calculer la limite prédéterminée.

8. Procédé selon l'une quelconque des revendications précédentes, comprenant l'étape d'envoi d'un signal par le contrôleur afin d'accuser la réception de la demande de fermeture.

9. Procédé selon la revendication 8, comprenant l'étape d'annulation de la demande de fermeture, l'étape d'annulation comprenant l'envoi d'une deuxième demande de fermeture au contrôleur à la suite de l'étape d'envoi d'un signal, l'étape d'envoi d'une deuxième demande annulant la demande de fermeture.

10. Procédé selon l'une quelconque des revendications précédentes, dans lequel la demande totale de puissance électrique du système est la demande instantanée totale ou la demande moyenne sur un intervalle totale.

11. Procédé selon l'une quelconque des revendications précédentes, dans lequel la demande de puissance électrique du système est mesurée et évaluée en amplitudes de courant.

12. Dispositif pour équilibrer la demande de puissance électrique à la disponibilité de celle-ci, pouvant être connecté dans un système, le système comprenant une pluralité de circuits électriques agencés pour consommer de la puissance électrique, le système, en utilisation, étant alimenté au moins temporairement avec une puissance électrique limitée par une alimentation, dans lequel le dispositif comprend :
- une pluralité de commutateurs de puissance (32, 33, 34) pour connecter les circuits électriques à l'alimentation, et
- un contrôleur pour commander le fonctionnement des commutateurs de puissance, dans lequel le contrôleur est un contrôleur d'état pour au moins un commutateur de puissance, le contrôleur d'état mettant en oeuvre quatre états,
dans lequel le dispositif comprend des moyens pour exécuter le procédé selon l'une quelconque des revendications précédentes.

13. Dispositif selon la revendication 12, comprenant une interface pour une communication dans les deux sens entre les commutateurs de puissance et le contrôleur.

14. Dispositif selon la revendication 13, dans lequel l'interface pour une communication dans les deux sens comprend un bouton-poussoir pour envoyer des impulsions au contrôleur et un dispositif d'émission de lumière commandé par le contrôleur.

15. Dispositif selon la revendication 14, dans lequel le dispositif d'émission de lumière est configuré pour émettre une lumière conformément à des codes de clignotement prédéterminés relatifs à l'analyse par le contrôleur d'une demande de fermeture et/ou à un classement par priorité.
